# EUROPÄISCHE PATENTSCHRIFT

(11) **EP 0 261 589 B1**
(45) Veröffentlichungstag und Bekanntmachung des Hinweises auf die Patenterteilung: **16.02.1994**
(21) Anmeldenummer: 87113592.7
(22) Anmeldetag: 17.09.1987
(51) Int. Cl.: C08F 122/02, C08F 22/02, C08F 8/12, C02F 5/10

(54) **Verfahren zur Herstellung von Polymaleinsäure**
Process for preparing polymaleic acid
Procédé de préparation d'acide polymaléique

(30) Priorität: 19.09.1986 DE 3631815
(43) Veröffentlichungstag der Anmeldung: 30.03.1988
(73) Patentinhaber: BASF Aktiengesellschaft, 67063 Ludwigshafen (DE)
(72) Erfinder: Denzinger, Walter, 6720 Speyer (DE); Hartmann, Heinrich, Dr., 6703 Limburgerhof (DE); Goeckel, Ulrich, Dr., 6737 Boehl-Iggelheim (DE); Richter, Felix, Dr., 6835 Bruehl (DE); Winkler, Ekhard, Dr., 6704 Mutterstadt (DE); Raubenheimer, Hans-Jürgen, 6834 Ketsch (DE)

(56) Entgegenhaltungen:
- EP-A- 0 190 104
- DE-A- 2 047 340

## Beschreibung

Aus der GB-PS 1 024 725 ist ein Verfahren zur Herstellung von Polymaleinsäureanhydrid bekannt, bei dem man Maleinsäureanhydrid in inerten Lösemitteln, z.B. Dialkylethern, Tetrahydrofuran, Dioxan, Benzol oder chlorierten Kohlenwasserstoffen, wie Chloroform, in Gegenwart von organischen Percarbonaten oder Diacylperoxiden polymerisiert. Besonders bevorzugte Lösemittel sind Benzol und Chloroform. Als Polymerisationsinitiatoren werden beispielweise Diisopropylpercarbonat, Dibenzoylperoxid, Dicyclohexylpercarbonat in Mengen von 2 bis 40 Gew.%, bezogen auf Maleinsäureanhydrid, verwendet. Die so hergestellten Polymerisate enthalten erhebliche Mengen an nichtpolymerisiertem Maleinsäureanhydrid.

Nach dem Verfahren der GB-PS 1 411 063 erhält man Polymaleinsäureanhydrid durch Polymerisieren von Maleinsäureanhydrid in Xylol als Lösemittel, das bis zu 99 % ortho-Xylol enthält, wobei man als Polymerisationsinitiator Di-tert.-butylperoxid in einer Menge von 15 bis 40 Gew.%, bezogen auf Maleinsäureanhydrid, einsetzt. Auch die nach diesem Verfahren hergestellten Polymerisate enthalten beträchtliche Menge an nichtpolymerisiertem Maleinsäureanhydrid.

Aus der US-PS 3 810 834 ist bekannt, daß man hydrolysierte Polymaleinsäureanhydride mit einem Molekulargewicht von 300 bis 5000 vor der Hydrolyse oder wasserlöslichen Salzen von derartigen hydrolysierten Polymaleinsäureanhydriden bei der Wasserbehandlung einsetzt, wobei die Kesselsteinbildung vermindert und in vielen Fällen praktisch verhindert wird. Die dafür geeigneten Polymerisate werden durch Polymerisieren von Maleinsäureanhydrid in Toluol unter Verwendung von Benzoylperoxid und anschließende Hydrolyse des so erhaltenen Polymaleinsäureanhydrids hergestellt. Da die Polymerisation des Maleinsäureanhydrids nicht vollständig und die Abtrennung von nichtpolymerisiertem Maleinsäureanhydrid vom Polymerisat schwierig ist, enthalten die Polymaleinsäuren beträchtliche Mengen an Maleinsäure.

Der vorliegenden Erfindung liegt die Aufgabe zugrunde, ein Verfahren zur Herstellung von Polymaleinsäure zur Verfügung zu stellen, bei dem man Polymerisate erhält, deren Gehalt an freier Maleinsäure wesentlich unter dem Maleinsäuregehalt der bekannten Polymaleinsäuren liegt. Eine weitere Aufgabe der Erfindung ist es, Produkte für die Verminderung von Kesselsteinabscheidungen bzw. Wasserhärteausscheidungen in wasserführenden Systemen zur Verfügung zu stellen, die wirksamer sind als bisher verwendete Polymaleinsäuren.

Die Aufgaben werden erfindungsgemäß gelöst mit einem Verfahren zur Herstellung von Polymaleinsäure durch Polymerisieren von Maleinsäureanhydrid in einem aromatischen Kohlenwasserstoff bei Temperaturen von 60 bis 200°C in Gegenwart von Polymerisationsinitiatoren und Hydrolysieren der Polymerisate, wenn man als Polymerisationsinitiatoren Peroxiester der Formeln 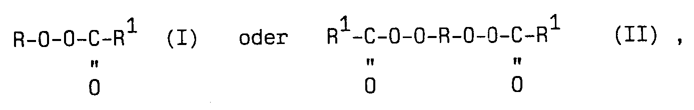
in denen R¹ einen gesättigten C₁- bis C₁₇-Alkyl- oder Arylrest, H oder einen ethylenisch ungesättigten C₂- bis C₁₇-Alkenylrest, der gegebenenfalls noch eine Carboxylgruppe tragen kann,
R in Formel I für eine C₃- bis C₂₂-Alkylgruppe oder eine Alkylgruppe steht, die einen oder mehrere aromatische Substituenten aufweist, und
R in Formel II eine C₂- bis C₂₂-Alkylengruppe bedeutet,
in einer Menge von 1 bis 20 Gew.%, bezogen auf Maleinsäureanhydrid, einsetzt. Die nach diesem Verfahren erhältlichen Polymaleinsäuren sind wirksame Mittel bei der Wasserbehandlung zur Verhinderung der Kesselsteinabscheidung oder Wasserhärteausscheidung in wasserführenden Systemen.

Bei dem erfindungsgemäßen Verfahren polymerisiert man Maleinsäureanhydrid in einem aromatischen Kohlenwasserstoff oder in Mischungen solcher Kohlenwasserstoffe. Geeignete aromatische Kohlenwasserstoffe sind beispielsweise Benzol, Toluol, Xylol, Ethylbenzol, Isopropylbenzol, n-Propylbenzol, o-, m- und p-Diethylbenzol, p-Diisopropylbenzol und Tetralin. Sämtliche Isomeren des Xylols - o-, m- und p-Xylol - können entweder in reiner Form oder in Form von Mischungen eingesetzt werden, die als sogenanntes technisches Xylol im Handel erhältlich sind. Vorzugsweise verwendet man als aromatische Kohlenwasserstoffe Toluol und o-Xylol.

Als Polymerisationsinitiatoren verwendet man gemäß Erfindung Peroxiester, die sich formal von gesättigten oder ethylenisch ungesättigten Carbonsäuren ableiten. Die primären Ester der Persäuren werden im allgemeinen durch Umsetzung der Bariumsalze von primären Alkylhydroperoxiden mit Acylchloriden hergestellt, während die tertiären Alkylester der Persäuren durch gleichzeitige Zugabe von verdünnten Alkalien und Acylchlorid zu tert.-Alkylhydroperoxiden erhältlich sind. Der Carbonsäureteil des Peroxiestermoleküls leitet sich von gesättigten C₁-bis C₁₈-Carbonsäuren oder von ethylenisch ungesättigten C₃- bis C₁₈-Carbonsäuren ab, vorzugsweise von jeweils gesättigten oder ethylenisch ungesättigten Carbonsäuren mit 4 bis 10 Kohlenstoffatomen ab. Die in Betracht kommenden Peroxiester können vereinfachend mit Hilfe der folgenden Formeln dargestellt werden: 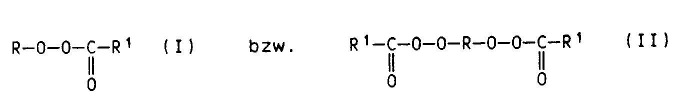
R¹ in den Formeln I und II bedeutet einen gesättigten C₁- bis C₁₇-Alkyl- oder Arylrest, H oder einen ethylenisch ungesättigten C₂- bis C₁₇-Alkenylrest, der gegebenenfalls noch eine Carboxylgruppe tragen kann.

Der Substituent R in Formel I steht für eine C₃- bis C₂₂-Alkylgruppe oder eine Alkylgruppe, die einen oder mehrere aromatische Substituenten aufweist, z.B. die Cumylgruppe. R ist in Formel II eine C₂- bis C₂₂-Alkylengruppe und steht in Formel I vorzugsweise für eine tert.-Butyl- oder tert.-Amylgruppe.

Beispiele für die in Betracht kommenden Alkyl- bzw. Aralkylperoxiester von Carbonsäuren sind Cumyl-perneodecanoat, tert.-Butyl-perneodecanoat, tert.-Amyl-perneodecanoat, tert.-Amyl-perpivalat, tert.-Butyl-perpivalat, tert.-Butyl-perneohexanoat, tert.-Butyl-perisobutyrat, tert.-Butyl-per-2-ethylhexanoat, tert.-Butyl-perisononanoat, tert.-Butyl-permaleinat, tert.-Butyl-perbenzoat, 2,5-Dimethylhexan-2,5-diperbenzoat und tert.-Butyl-per-3,5,5-trimethylhexanoat. Die genannten Alkylperester können entweder allein oder in Mischung bei der Polymerisation eingesetzt werden. Vorzugsweise verwendet man tert.-Butylperpivalat, tert.-Butyl-per-2-ethylhexanoat oder tert.-Butyl-perbenzoat als alleinige Initiatoren oder in Mischung untereinander bzw. auch Gemische aus diesen Peroxiestern zusammen mit anderen Alkylperoxiestern. Bezogen auf das bei der Polymerisation eingesetzte Maleinsäureanhydrid verwendet man 1 bis 20, vorzugsweise 5 bis 16 Gew.% der Peroxiester.

Zunächst wird Polymaleinsäureanhydrid hergestellt, indem man Maleinsäureanhydrid in einem aromatischen Kohlenwasserstoff löst und durch Zusatz mindestens eines Peroxiesters darin polymerisiert. Die Konzentration des Maleinsäureanhydrids in der Lösung des aromatischen Kohlenwasserstoffs beträgt 20 bis 80, vorzugsweise 30 bis 70 Gew.%, d.h. pro Gewichtsteil Maleinsäureanhydrid verwendet man 0,25 bis 4, vorzugsweise 0,43 bis 2,33 Gewichtsteile eines aromatischen Kohlenwasserstoffs. Die Polymerisation läuft bei Temperaturen von 60 bis 200°C ab und wird vorzugsweise in dem Temperaturbereich von 80 bis 150°C durchgeführt. Bei kleineren Ansätzen, bei denen die entstehende Polymerisationswärme leicht abgeführt werden kann, ist es möglich, eine Lösung von Maleinsäureanhydrid im aromatischen Kohlenwasserstoff, die außerdem einen gemäß Erfindung zu verwendenden Polymerisationsinitiator enthält, durch Erhitzen auf eine Temperatur in dem angegebenen Bereich zu polymerisieren. Vorteilhafter ist es dagegen, eine Lösung von Maleinsäureanhydrid in mindestens einem aromatischen Kohlenwasserstoff in einem Reaktor vorzulegen, auf die für die Polymerisation erforderliche Temperatur zu erwärmen und den Peroxiester gelöst in einem aromatischen Lösungsmittel oder einem inerten Lösemittel kontinuierlich oder portionsweise nach Fortschritt der Polymerisationsreaktion zuzudosieren. In einer anderen Verfahrensvariante erhitzt man den aromatischen Kohlenwasserstoff auf eine Temperatur in dem oben angegebenen Bereich und führt kontinuierlich oder absatzweise Maleinsäureanhydrid und Polymerisationsinitiator in dem Maße zu, wie die Polymerisation abläuft.

Man kann die Polymerisation jedoch auch so durchführen, daß man einen Teil des zu polymerisierenden Gemisches, z.B. 5 bis 10 % des Gesamtansatzes, in einem Polymerisationsreaktor auf eine Temperatur in dem Bereich von 60 bis 200°C erwärmt, so daß die Polymerisation startet und dann den Rest der zu polymerisierenden Komponenten entweder in Form einer Mischung (Mischung aus Maleinsäureanhydrid und Peroxiester gelöst in aromatischem Kohlenwasserstoff) oder jeweils Lösungen von Maleinsäureanhydrid bzw. Lösungen von Peroxiester in einem aromatischen Kohlenwasserstoff kontinuierlich oder absatzweise der auf die Polymerisationstemperatur erhitzten Vorlage zuführt. Die Polymerisation wird vorzugsweise unter Inertgasatmosphäre, z.B. unter Stickstoff, durchgeführt. Um die bei der Polymerisation entstehende Wärme abzuführen, ist es technisch am einfachsten, die Polymerisation beim Siedepunkt des aromatischen Kohlenwasserstoffs durchzuführen, weil die Polymerisationswärme dann mit Hilfe einer Siedekühlung aus dem System entfernt werden kann. Der Einsatz von Mischungen mehrerer aromatischer Kohlenwasserstoffe ermöglicht dabei die Einstellung der Polymerisationstemperaturen. Will man dagegen die Polymerisation in einem reinen aromatischen Kohlenwasserstoff, z.B. in Toluol durchführen, so kann man, um mit einer Siedekühlung zu arbeiten, die Polymerisation auch unter vermindertem bzw. erhöhtem Druck durchführen. Neben den oben beschriebenen weitgehend diskontinuierlich ablaufenden Polymerisationen kann das Verfahren auch für die Herstellung größerer Mengen an Polymaleinsäureanhydrid kontinuierlich durchgeführt werden. Die Polymerisationszeiten betragen 1 bis 10, vorzugsweise 2 bis 8 Stunden.

Um Polymerisate mit besonders niedrigem Restmonomerengehalt herzustellen, kann man an die Hauptpolymerisation eine Nachpolymerisation anschließen, die entweder bei der Temperatur durchgeführt wird, bei der auch die Hauptpolymerisation vorgenommen wurde oder man führt die Nachpolymerisation bei einer um 10 bis 40°C höheren Temperatur durch. In allen Fällen ist es jedoch bei der Nachpolymerisation erforderlich, Peroxiester zuzusetzen. Für die Haupt- und Nachpolymerisation benötigt man insgesamt 1 bis 20 Gew.% der Peroxiester. Bei der Hauptpolymerisation kann die insgesamt erforderliche Initiatormenge eingesetzt werden oder man verwendet hierfür 80 bis 95 % der insgesamt notwendigen Initiatormenge und gibt den Rest der Initiatormenge nach Abschluß der Hauptpolymerisation zum Reaktionsgemisch und führt dann die Nachpolymerisation durch.

Der Umsatz von Maleinsäureanhydrid liegt oberhalb von 99 %, so daß man Polymerisate des Maleinsäureanhydrids erhält, die weniger als 1 Gew.% nicht polymerisiertes Maleinsäureanhydrid enthalten. Die Struktur der Polymerisate ist nicht bekannt. Aus der Mengenbilanz, der Elementaranalyse und aufgrund von IR-Spektren kann jedoch gesagt werden, daß das Polymerisat außer dem einpolymerisierten Maleinsäureanhydrid noch den jeweils verwendeten aromatischen Kohlenwasserstoff und Zerfallsprodukte der Peroxiester in gebundener Form enthält. Bezogen auf Maleinsäure werden bis zu 75, vorzugsweise 10 bis 65 Gew.% an aromatischen Kohlenwasserstoffen und an Zerfallsprodukten des Initiators in die Polymaleinsäure eingebaut, wenn man von einem 100 %igen Umsatz des Maleinsäureanhydrids zu Polymaleinsäureanhydrid ausgeht. Bei der Polymerisation des Maleinsäureanhydrids gemäß Erfindung erhält man je nach Auswahl des Lösungsmittels klare Polymerlösungen (z.B. in Ethylbenzol) oder Ausfällungen der Polymeren oder auch zwei getrennte Phasen, die jeweils Polymerisat enthalten, wobei die untere Phase bei Temperaturen oberhalb von 90°C eine ölige Konsistenz aufweist und beim Abkühlen erstarrt. Die obere Phase besteht im wesentlichen aus einer Lösung (z.B. beim Polymerisieren in Xylol). Die Polymerisate in den beiden verschiedenen Phasen haben unterschiedliche anwendungstechnische Eigenschaften. Sie können jedoch beide gemeinsam für denselben Anwendungszweck verwendet werden, so daß eine Trennung nicht erforderlich ist. Man kann jedoch auch eine Trennung bzw. Fraktionierung des Polymeransatzes vornehmen, wobei dann besonders wirksame Wasserbehandlungsmittel herstellbar sind. Die bei der Polymerisation nicht in das Polymerisat eingebauten aromatischen Kohlenwasserstoffe können zurückgewonnen und erneut - selbst ohne Reinigung - bei der Polymerisation wiederverwendet werden.

Die Polymerisation des Maleinsäureanhydrids wird in Abwesenheit von Wasser durchgeführt. Die bei der Polymerisation eingesetzten aromatischen Kohlenwasserstoffe sind praktisch wasserfrei bzw. enthalten bis höchstens 0,2 Gew.% Wasser, d.h. Mengen an Wasser, die bei Kontakt zwischen Wasser und aromatischem Kohlenwasserstoff darin gelöst sind.

In einem zweiten Verfahrensschritt werden die bei der Polymerisation hergestellten Produkte hydrolysiert. Hierfür kann man zur Herstellung von Polymerisaten in der Säureform Wasser zusetzen und zur Vervollständigung der Hydrolyse der Anhydrid-Gruppen des Polymerisats das Reaktionsgemisch auf eine Temperatur in dem Bereich von 70 bis 150°C erhitzen, wobei bei Temperaturen oberhalb der Siedetemperatur der Lösungsmittel-Wasser-Gemische unter Druck gearbeitet wird. Der bei der Polymerisation eingesetzte aromatische Kohlenwasserstoff kann dabei vor oder auch nach der Hydrolyse von der entstehenden wäßrigen Polymerlösung abdestilliert werden. Falls gewünscht, kann die wäßrige Lösung der Polymaleinsäure mit Alkali, Ammoniak oder Aminen neutralisiert werden. Zur Herstellung der Salze der Polymaleinsäure verfährt man jedoch vorzugsweise so, daß man das bei der Polymerisation erhaltene Reaktionsgemisch mit wäßrigen Lösungen einer Alkalimetallbase, Ammoniak oder eines Amins neutralisiert. Auch in diesen Fällen kann der aromatische Kohlenwasserstoff vor, während oder nach der Neutralisation abdestilliert werden. Man erhält dann in allen Fällen wäßrige Lösungen von Salzen der Polymaleinsäure. Als Alkalimetallbasen verwendet man vorzugsweise Natronlauge oder Kalilauge. Die Neutralisation kann außerdem mit Ammoniak oder Aminen, z.B. Triethylamin, Hexylamin, Ethanolamin, Triethanolamin oder Morpholin vorgenommen werden. Die Hydrolyse der Anhydridgruppen des Polymerisats kann jedoch außer mit Wasser mit Hilfe von wäßrigen Lösungen von Basen oder Säuren vorgenommen werden.

Der K-Wert der hydrolysierten Polymerisate beträgt 7 bis 20 und liegt vorzugsweise in dem Bereich von 8,5 bis 15 (bestimmt als Natriumsalz in 5 %iger wäßriger Lösung bei 25°C und pH 7). Die nach dem erfindungsgemäßen Verfahren erhaltenen hydrolysierten Polymerisate enthalten weniger als 1 Gew.% monomerer Maleinsäure (polarographisch bestimmt). Die wäßrigen Lösungen der hydrolysierten Polymerisate können daher ohne weitere Reinigung direkt zur Wasserbehandlung verwendet werden, um Kesselsteinabscheidung bzw. Wasserhärteausscheidung in wasserführenden Systemen zu vermindern bzw. zu unterbinden.

Die Wirkungsweise dieser sog. Belagsverhinderer besteht darin, die Bildung von Kristallen der Härtebildnersalze, wie Cacliumcarbonat, Magnesiumoxid, Magnesiumcarbonat, Calcium-, Barium- oder Strontiumsulfat, Calciumphosphat (Apatit) und ähnliche im unterstöchiometrischen Dosierungsbereich zu verhindern oder die Bildung dieser Niederschläge so zu beeinflussen, daß keine harten und steinartigen Beläge entstehen, sondern leicht ausschwemmbare, im Wasser fein verteilte Ausscheidungen gebildet werden. Auf diese Weise werden die Oberflächen von z.B. Wärmeaustauschern, Rohren oder Pumpenbauteilen von Belägen freigehalten und deren Korrosionsneigung vermindert. Insbesondere wird die Gefahr von Lochfraßkorrosion unter diesen Belägen verringert. Ferner wird das Aufwachsen von Microorganismen auf diese Metalloberflächen erschwert. Durch den Einfluß dieser Belagsverhinderer kann so die Lebensdauer von solchen Anlagen erhöht und Stillstandszeiten zur Reinigung von Anlagenteilen erheblich reduziert werden. Die hierzu benötigten Mengen von Belagsverhinderer betragen nur 0,1 bis 100 ppm, bezogen auf die jeweilige Wassermenge. Bei den wasserführenden Systemen handelt es sich z.B. um offene oder geschlossene Kühlkreisläufe, beispielsweise von Kraftwerken oder chemischen Anlagen, wie Reaktoren, Destillationsapparaturen und ähnlichen Bauteilen, bei denen Wärme abgeführt werden muß. Der Einsatz dieser Belagsverhinderer kann auch in Boilerwässern und Dampferzeugern, vorzugsweise im Bereich von Wassertemperaturen unterhalb 150°C erfolgen. Eine bevorzugte Anwendung der erfindungsgemäßen Belagsverhinderer ist ferner die Entsalzung von Meer- und Brackwasser durch Destillation oder Membranverfahren, wie z.B. die umgekehrte Osmose oder Elektrodialyse. So wird z.B. beim sog. MSF-Destillationsverfahren zur Meerwasserentsalzung eingedicktes Meerwasser mit erhöhter Temperatur im Umlauf gefahren. Die erfindungsgemäßen Belagsverhinderer unterbinden wirksam die Ausscheidung von Härtebildnern, wie z.B. Brucit und deren Anbacken an Anlagenbauteile.

Bei Membranverfahren kann die Schädigung der Membranen durch auskristallisierende Härtebildner wirksam verhindert werden. Auf diese Weise ermöglichen diese Belagsverhinderer höhere Eindickungsfaktoren, verbesserte Ausbeute an Reinwasser und längere Lebensdauer der Membranen. Eine weitere Anwendung dieser Belagsverhinderer ist z.B. beim Eindampfen von Zuckersäften aus Rohr- oder Rübenzucker gegeben. Im Gegensatz zu oben beschriebenen Anwendungen werden hier dem Zuckerdünnsaft zur Reinigung z.B. Calciumhydroxid, Kohlendioxid, Schwefeldioxid oder gegebenenfalls Phosphorsäure zugesetzt. Nach Filtration im Zuckersaft verbleibende schwerlöslische Calciumsalze, wie z.B. Calciumcarbonat, -sulfat oder -phosphat, fallen dann während des Eindampfprozesses aus und können als steinharte Beläge auf Wärmetauscheroberflächen auftreten. Dies gilt ebenso auch für Zuckerbegleitstoffe, wie Kieselsäure oder Calciumsalze organischer Säuren, wie z.B. Oxalsäure.

Ähnliches gilt für Verfahren, die sich an die Zuckergewinnung anschließen, so z.B. die Alkoholgewinnung aus Rückständen der Zuckerproduktion.

Die nach dem beanspruchten Verfahren erhaltenen Belagsverhinderer sind in der Lage, diese Belagsbildung weitgehend zu unterbinden, so daß Stillstandszeiten der Anlage zur Reinigung, z.B. durch Auskochen, wesentlich verringert werden können. Ein wesentlicher Gesichtspunkt hierbei ist ferner die beträchtliche Energieeinsparung durch Vermeidung der genannten wärmeisolierenden Beläge.

Die in den beschriebenen Anwendungen nötigen Mengen des Belagsverhinderers sind unterschiedlich, betragen jedoch zwischen 0,1 und 100 ppm, bezogen auf eingesetztes Kühlwasser, Boilerwasser, Prozeßwasser oder z.B. Zuckersaft.

Die hydrolysierten Polymerisate können außerdem als Inkrustations- und Vergrauungsinhibitoren in einer Menge von 0,5 bis 10 Gew.% in Waschmittelformulierungen eingearbeitet werden. Die erfindungsgemäßen Polymaleinsäuren kommen auch als Wasserhärtestabilisatoren in Reinigungsmittelformulierungen in Betracht. Sie eignen sich außerdem in einer Menge von 0,1 bis 5 Gew.% als Dispergiermittel für Pigmente, z.B. zur Herstellung von wäßrigen hochkonzentrierten Anschlämmungen von Clay oder Kreide für die Bereitung von Papierstreichmassen.

Die in den Beispielen angegebenen Teile sind Gewichtsteile. Die Angaben in Prozent beziehen sich auf das Gewicht der Stoffe. Die K-Werte der hydrolysierten Polymerisate wurden nach H. Fikentscher, Cellulosechemie, Band 13, 48-64 und 71-74 (1932) in wäßriger Lösung bei einem pH-Wert von 7, einer Temperatur von 25°C und einer Polymerkonzentration des Natriumsalzes von 5 Gew.% bestimmt.

### Beispiel 1

In einem 0,5 l fassenden Glasreaktor, der mit einem Thermometer, Stickstoffeinleitung, Kühler, Zulaufgefäß und einer Vorrichtung zum Einleiten von Wasserdampf versehen ist, werden 233 g technisches Xylol und 100 g Maleinsäureanhydrid vorgelegt und unter Rühren zum Sieden unter Rückfluß erhitzt. Das technische Xylol besteht aus einer Mischung, die 15 % o-Xylol, 68 % m- und p-Xylol und 17 % Ethylbenzol enthält. Zu der siedenden Lösung von Maleinsäureanhydrid in Xylol fügt man dann innerhalb von 2 Stunden kontinuierlich eine Lösung von 7,5 g tert.-Butyl-per-2-ethylhexanoat in 50 g technischem Xylol. Nach Beendigung der Initiatorzugabe wird das Reaktionsgemisch noch 4 Stunden zum Sieden erhitzt und dann auf 90°C abgekühlt. Man fügt dann 50 g Wasser zu und entfernt das eingesetzte nichtverbrauchte Lösemittel durch Einleiten von Wasserdampf. Man erhält wäßrige Lösung mit einem Feststoffgehalt von 50,9 %. Der Gehalt der Polymaleinsäure an Maleinsäure beträgt 0,16 %. Das Polymerisat hat in Form des Natriumsalzes einen K-Wert von 9,3. Die Ausbeute an Polymaleinsäure beträgt 145 %, bezogen auf Maleinsäure, deren Menge sich aus eingesetztem Maleinsäureanhydrid errechnet.

### Beispiel 2

In der im Beispiel 1 beschriebenen Polymerisationsapparatur werden 100 g technisches Xylol und 100 g Maleinsäureanhydrid vorgelegt und unter Rühren zum Sieden unter Rückfluß erhitzt. Sobald das Rückflußsieden beginnt, fügt man innerhalb von 2 Stunden eine Lösung von 10 g tert.-Butyl-per-2-ethylhexanoat in 50 g technischem Xylol kontinuierlich zu. Nach Zugabe des Initiators wird das Polymerisationsgemisch noch 4 Stunden zum Sieden erhitzt und danach auf 90°C abgekühlt. Zur Hydrolyse des Polymaleinsäureanhydrids fügt man 50 g Wasser zu und entfernt die bei der Polymerisation eingesetzten aromatischen Kohlenwasserstoffe durch Einleiten von Wasserdampf. Man erhält eine wäßrige Lösung mit einem Feststoffgehalt von 50,6 %. Die so erhaltene Polymaleinsäure hat in der Natriumsalz-Form einen K-Wert von 9,9 und enthält 0,15 % nichtpolymerisierte Maleinsäure. Die Ausbeute an Polymaleinsäure beträgt 145 %, bezogen auf Maleinsäure, die sich aus dem eingesetzten Maleinsäureanhydrid errechnet.

### Beispiel 3

In der im Beispiel 1 angegebenen Apparatur wird eine Lösung von 100 g Maleinsäureanyhdrid in 100 g Xylol unter Rühren zum Rückflußsieden erhitzt und unter guter Durchmischung innerhalb von 2 Stunden mit einer Lösung von 15 g tert.-Butyl-per-2-ethylhexanoat in 50 Teilen technischem Xylol kontinuierlich versetzt. Das Reaktionsgemisch wird anschließend noch 4 Stunden bei Siedetemperatur gerührt und danach auf 95°C abgekühlt. Man gibt 50 g Wasser hinzu und entfernt die bei der Polymerisation verwendeten aromatischen Kohlenwasserstoffe durch Einleiten von Wasserdampf. Man erhält eine klare gelbe Lösung, die einen Feststoffgehalt von 49,8 % hat. Es handelt sich dabei um eine wäßrige Lösung von Polymaleinsäure, die in Form des Natriumsalzes einen K-Wert von 9,3 hat. Bezogen auf Feststoffgehalt werden weniger als 0,001 % nichtpolymerisierte Maleinsäure gefunden. Die Ausbeute an Polymaleinsäure beträgt 139 %, bezogen auf Maleinsäure, deren Menge sich aus dem eingesetzten Maleinsäureanhydrid errechnet.

### Beispiel 4

In einem 2 l fassenden Glasreaktor, der mit Rührer, Thermometer, Stickstoffeinleitung, Kühler, Zulaufgefäßen und einer Vorrichtung für das Einleiten von Wasserdampf versehen ist, wird eine Lösung von 200 g Maleinsäureanhydrid in 700 g technischem Xylol auf eine Temperatur von 100°C unter Stickstoffatmosphäre erhitzt. Sobald die Temperatur von 100°C ereicht ist, dosiert man innerhalb von 5 Stunden eine Lösung von 15 g tert.-Butyl-per-2-ethylhexanoat in 100 g technischem Xylol. Die Polymerisationstemperatur beträgt 100°C. Nach Abschluß der Initiatorzugabe wird die Mischung bis zum Rückflußsieden erwärmt und 1 Stunde bei Rückfluß gehalten. Danach wird das Reaktionsgemisch auf 97°C abgekühlt und mit 200 g Wasser hydrolysiert. Durch Einleiten von Wasserdampf werden die bei der Polymerisation eingesetzten aromatischen Kohlenwasserstoffe azeotrop abdestilliert. Es verbleibt eine gelbe klare Lösung mit einem Feststoffgehalt von 51 %. Die Polymaleinsäure hat in Form des Na-Salzes einen K-Wert von 9,2. Der Restmonomerengehalt, bezogen auf den Feststoffgehalt, beträgt 0,27 % Maleinsäure. Die Ausbeute an Polymaleinsäure beträgt 165 %, bezogen auf Maleinsäure, deren Menge sich aus dem eingesetzten Maleinsäureanhydrid errechnet.

### Beispiel 5

In dem im Beispiel 4 beschriebenen Reaktor werden 600 g m-Xylol und 400 g Maleinsäureanhydrid vorgelegt und unter einer Stickstoffatmosphäre und unter Rühren auf eine Temperatur von 115°C erwärmt. Sobald die Lösung von Maleinsäureanhydrid in m-Xylol die Temperatur von 115° erreicht hat, dosiert man im Verlauf von 5 Stunden eine Lösung von 30 g tert.-Butyl-per-2-ethylhexanoat in 100 g m-Xylol zu und erhitzt das Reaktionsgemisch nach Abschluß der Initiatorzugabe bis zum Rückflußsieden, bei dem die Nachpolymerisation 1 Stunde lang durchgeführt wird. Danach kühlt man das Reaktionsgemisch auf eine Temperatur von 93°C ab, fügt zur Hydrolyse 200 g Wasser zu und entfernt das m-Xylol azeotrop durch Einleiten von Wasserdampf. Man erhält eine klare gelbe wäßrige Lösung mit einem Feststoffgehalt von 53,5 %. Die Polymaleinsäure hat in Form des Natriumsalzes einen K-Wert von 9,5. Der Gehalt an nichtpolymerisierter Maleinsäure, bezogen auf Feststoffgehalt, beträgt 0,48 %. Die Ausbeute an Polymaleinsäure beträgt 125 %, bezogen auf Maleinsäure, deren Menge sich aus dem bei der Polymerisation eingesetzten Maleinsäureanhydrid errechnet.

### Beispiel 6

In dem im Beispiel 4 beschriebenen Reaktor werden 600 g o-Xylol und 400 g Maleinsäureanhydrid vorgelegt und in einer Stickstoffatmosphäre zum Sieden erhitzt. Sobald das Rückflußsieden beginnt, fügt man innerhalb von 5 Stunden eine Lösung von 60 g tert.-Butyl-per-2-ethylhexanoat in 100 g o-Xylol kontinuierlich zu. Nach Beendigung der Initiatorzugabe wird das Reaktionsgemisch noch 1 Stunde bei Rückflußsieden nachpolymerisiert und dann auf eine Temperatur von 94°C abgekühlt. Man gibt zur Hydrolyse des entstandenen Polymerisats 200 g Wasser zu und entfernt das o-Xylol azeotrop durch Einleiten von Wasserdampf. Es verbleibt eine klare wäßrige Lösung mit einem Feststoffgehalt von 58,1 %. Die so hergestellte Polymaleinsäure hat in Form des Na-Salzes einen K-Wert von 9,6. Der Gehalt an nichtpolymerisierter Maleinsäure beträgt, bezogen auf Feststoff, 0,11 %. Die Ausbeute an Polymaleinsäure beträgt 126 %, bezogen auf Maleinsäure, deren Menge sich aus dem bei der Polymerisation eingesetztem Maleinsäureanhydrid errechnet.

### Beispiel 7

In der im Beispiel 4 beschriebenen Apparatur wird eine Lösung von 400 g Maleinsäureanhydrid in 600 g Ethylbenzol auf eine Temperatur von 115°C erwärmt. Die Polymerisation wird dann bei dieser Temperatur durchgeführt, in dem man zu der Vorlage eine Lösung von 30 g tert.-Butyl-per-2-ethylhexanoat in 100 g Ethylbenzol kontinuierlich innerhalb von 5 Stunden zudosiert. Das Reaktionsgemisch wird 1 Stunde bei 115°C nach beendeter Initiatorzugabe nachpolymerisiert, danach auf 97°C abgekühlt und zur Hydrolyse mit 200 g Wasser versetzt. Das bei der Polymerisation eingesetzte Ethylbenzol wird durch azeotrope Destillation entfernt. Man erhält eine klare gelbe wäßrige Lösung, aus der sich bei Raumtemperatur Kristalle abscheiden und die einen Feststoffgehalt von 50,8 % hat. Der K-Wert der Polymaleinsäure beträgt 9,0. Bezogen auf Feststoffe findet man 0,11 % nichtpolymerisierte Maleinsäure. Die Ausbeute beträgt 155 %, bezogen auf Maleinsäure, deren Menge sich aus dem bei der Polymerisation eingesetztem Maleinsäureanhydrid ergibt.

### Beispiel 8

In einem Reaktor aus Edelstahl, der 6 l Inhalt hat und für das Arbeiten unter Druck ausgelegt ist, sowie über Thermometer, Stickstoffeinleitung, Kühler, Dosiergefäß und einer Vorrichtung zum Einleiten für Wasserdampf ausgestattet ist, werden 1500 g Toluol und 1000 g Maleinsäureanhydrid unter einem Stickstoffdruck auf eine Temperatur von 140°C erwärmt. Der Druck beträgt 3 bar. Nachdem die vorgelegte Lösung eine Temperatur von 140°C erreicht hat, dosiert man innerhalb von 5 Stunden eine Lösung von 150 g tert.-Butyl-per-2-ethylhexanoat in 250 ml Toluol kontinuierlich zu. Die Temperatur wird während der Polymerisation auf 140°C gehalten. Nach Beendigung der Initiatorzugabe wird das Reaktionsgemisch noch 1 Stunde auf 140°C erwärmt. Danach läßt man den Reaktorinhalt auf 95°C abkühlen, fügt 500 g Wasser zu und destilliert das bei der Polymerisation eingesetzte und nichtverbrauchte Toluol azeotrop durch Einleiten von Wasserdampf ab. Man erhält eine bei 40°C klare bräunliche Lösung, die einen Feststoffgehalt von 50,6 % hat und aus der sich beim Abkühlen auf Raumtemperatur Kristalle ausscheiden. Die so hergestellte Polymaleinsäure hat in Form des Na-Salzes einen K-Wert von 9,6. Der Gehalt an monomerer Maleinsäure, bezogen auf Feststoff, beträgt 0,13 %.

### Beispiel 9

In dem in Beispiel 8 beschriebenen Reaktor wird eine Lösung von 1000 g Maleinsäureanhydrid in 1500 g Toluol vorgelegt und in Stickstoffatmosphäre auf eine Temperatur von 140°C erhitzt. Der Druck steigt dabei auf 3 bar an. Die Polymerisation wird innerhalb von 5 Stunden durch Zudosieren einer Lösung von 100 g tert.-Butyl-per-2-ethylhexanoat in 250 g Toluol durchgeführt. Nach Beendigung der Initiatorzugabe wird das Reaktionsgemisch noch 1 Stunde lang bei 140°C gerührt und danach auf 95°C abgekühlt. Man fügt 500 g Wasser zu und entfernt das nichtverbrauchte Toluol durch Einleiten von Wasserdampf. Man erhält eine klare bräunliche wäßrige Polymerlösung, aus der sich bei Raumtemperatur Kristalle ausscheiden und die einen Feststoffgehalt von 51 % hat. Die so hergestellte Polymaleinsäure hat in Form des Na-Salzes einen K-Wert von 9,4. Bezogen auf Feststoffgehalt beträgt der Anteil an nichtpolymerisierter Maleinsäure 0,25 %.

### Beispiel 10

Im dem in Beispiel 1 beschriebenen Reaktor wird eine Lösung von 100 g Maleinsäureanhydrid in 100 g technischem Xylol zum Sieden erhitzt und innerhalb von 2 Stunden kontinuierlich unter Stickstoffatmosphäre mit einer Lösung von 15 g tert.-Butyl-perbenzoat in 50 g technischem Xylol versetzt. Das Reaktionsgemisch wird anschließend bei Siedetemperatur des technischen Xylols 4 Stunden lang nachpolymerisiert, dann auf 95°C abgekühlt und mit 50 g Wasser versetzt. Die aromatischen Kohlenwasserstoffe werden anschließend durch Wasserdampfdestillation entfernt. Es verbleibt eine klare, bräunlich aussehende wäßrige Lösung von Polymaleinsäure mit einem Feststoffgehalt von 50,5 %. Die Polymaleinsäure hat in Form des Na-Salzes einen K-Wert von 10,1. Bezogen auf Feststoffgehalt beträgt der Gehalt an nichtpolymerisierter Maleinsäure 0,03 %. Die Ausbeute an Polymaleinsäure beträgt 145 %, bezogen auf Maleinsäure, deren Menge sich aus dem eingesetzten Maleinsäureanhydrid errechnet.

### Beispiel 11

In dem in Beispiel 1 beschriebenen Reaktor wird eine Lösung von 100 g Maleinsäureanhydrid in 100 g technischem Xylol auf eine Temperatur von 100°C erhitzt. Sobald die Temperatur von 100°C erreicht ist, wird innerhalb einer Zeit von 5 Stunden eine Lösung von 7,5 g tert.-Butyl-perpivalat (75 % in Aliphaten) in 50 g technischem Xylol zudosiert. Nach Beendigung der Initiatorzugabe wird das Reaktionsgemisch auf eine Temperatur von 140°C erwärmt und eine Stunde bei dieser Temperatur nachpolymerisiert. Man läßt es dann auf 95°C abkühlen, gibt 50 g Wasser hinzu und entfernt die aromatischen Kohlenwasserstoffe durch Einleiten von Wasserdampf. Man erhält eine klare hellbraun gefärbte wäßrige Lösung von Polymaleinsäure mit einem Feststoffgehalt von 53,7 %. Der K-Wert der so hergestellten Polymaleinsäure beträgt 10,8 in Form des Na-Salzes. Der Gehalt an nichtpolymerisierter Maleinsäure beträgt 0,28 %. Die Ausbeute beträgt 140 %, bezogen auf Maleinsäure, deren Menge sich aus dem eingesetzten Maleinsäureanhydrid errechnet.

### Vergleichsbeispiel 1

In dem in Beispiel 4 angegebenen Polymerisationsreaktor wird eine Lösung von 300 g Maleinsäureanhydrid in 300 g technischem Xylol unter Rühren zum Sieden unter Rückfluß erhitzt. Sobald die Lösung zu Sieden beginnt, fügt man innerhalb von 2 Stunden kontinuierlich eine Lösung von 100 g Di-tert.-butyl-peroxid, gelöst in 150 g technischem Xylol zu. Mit fortschreitender Polymerisation fällt der Siedepunkt des Reaktionsgemisches von 136 bis auf 125°C ab. Nach Beendigung der Initiatorzugabe wird das Reaktionsgemisch noch 4 Stunden bei 125°C nachpolymerisiert, danach auf 95°C abgekühlt und durch Zugabe von 300 g Wasser hydrolysiert. Die als Lösemittel verwendeten aromatischen Kohlenwasserstoffe, die nicht in das Polymere eingebaut worden sind, werden durch Einleiten von Wasserdampf azeotrop entfernt. Man erhält eine klare braune wäßrige Lösung von Polymaleinsäure mit einem Feststoffgehalt von 48,7 %. Die Polymaleinsäure hat einen K-Wert in Form des Natriumsalzes von 10,1. Der Gehalt an nichtpolymerisierter Maleinsäure beträgt, bezogen auf Feststoffe in der wäßrigen Lösung, 4,1 %.

### Vergleichsbeispiel 2

Das Vergleichsbeispiel 1 wird mit der Ausnahme wiederholt, daß man anstelle der dort verwendeten Initiatorlösung nunmehr eine Lösung von 45 g Di-tert.-butylperoxid in 150 g technischem Xylol einsetzt. Hierbei resultiert eine tiefbraun gefärbte klare wäßrige Lösung, die, bezogen auf den Feststoffgehalt, 86 % nicht polymerisierter Maleinsäure enthält.

### Vergleichsbeispiel 3

In der im Beispiel 4 angegebenen Apparatur polymerisiert man eine Lösung von 300 g Maleinsäureanhydrid in 300 g o-Xylol. Die Maleinsäureanhydrid-Lösung in Xylol wird zum Sieden erhitzt und beim Siedepunkt im Verlauf von 2 Stunden mit einer Lösung von 100 g Di-tert.-Butylperoxid in 150 g o-Xylol kontinuierlich versetzt. Der Siedepunkt des Reaktionsgemisches fällt dabei mit fortschreitender Polymerisation von 146 auf 127°C ab. Nach Beendigung des Initiatorzulaufs wird das Reaktionsgemisch noch 4 Stunden zum Sieden unter Rückfluß erhitzt, danach auf 95°C abgekühlt und mit 300 g Wasser zur Hydrolyse versetzt. Das als Lösemittel verwendete o-Xylol wird dann mit Hilfe einer Wasserdampfdestillation entfernt. Man erhält eine klare braune wäßrige Lösung von Polymaleinsäure mit einem Feststoffgehalt von 62,4 %. Der Restmonomerengehalt beträgt, bezogen auf Feststoff, 18,5%.

### Vergleichsbeispiel 4

In einem 4 l-fassenden Reaktor, der mit Rührer, Thermometer, Stickstoffeinleitung, Kühler, Zulaufgefäß und einer Vorrichtung für das Einleiten von Wasserdampf versehen ist, wird eine Lösung von 877 g Maleinsäureanhydrid in 877 g technischem Xylol zum Sieden unter Rückfluß erhitzt. Sobald die Lösung zu Sieden beginnt, wird sie unter Stickstoffatmosphäre und ständigem Rühren innerhalb von 2 Stunden kontinuierlich mit einer Lösung von 292 g tert.-Butylhydroperoxid in 350 g technischem Xylol versetzt. Nach Beendigung der Initiatorzugabe wird das Gemisch noch 4 Stunden zum Sieden erhitzt, dann auf 96°C abgekühlt, mit 600 g Wasser versetzt und anschließend einer Wasserdampfdestillation unterworfen, um das technische Xylol zu entfernen. Es resultiert eine klare braungefärbte wäßrige Lösung mit einem Feststoffgehalt von 55,9 %. Der Gehalt an nichtpolymerisierter Maleinsäure beträgt, bezogen auf Feststoffe, 10,5 %.

### Vergleichsbeispiel 5

In der im Beispiel 1 beschriebenen Apparatur wird eine Lösung von 100 g Maleinsäureanhydrid in 100 g technischem Xylol unter Stickstoff und Rühren zum Sieden erhitzt und innerhalb von 2 Stunden kontinuierlich mit einer Lösung von 15 g tert.-Butylhydroperoxid in 50 g technischem Xylol versetzt. Nach Abschluß der Initiatorzugabe wird das Reaktionsgemisch noch 4 Stunden zum Sieden erhitzt, dann auf 94°C abgekühlt, mit 50 g Wasser versetzt und einer Wasserdampfdestillation unterworfen. Man erhält eine klare braungefärbte Lösung mit einem Feststoffgehalt von 56,5 %. Der Gehalt an nichtpolymerisierter Maleinsäure beträgt, bezogen auf den Feststoffgehalt, 34,2 %.

### Vergleichsbeispiel 6

Das Vergleichsbeispiel 5 wird mit der Ausnahme wiederholt, daß man anstelle der dort eingesetzten Initiatorlösung nunmehr eine Lösung von 15 g Dicumylperoxid in 50 g technischem Xylol verwendet. Man erhält eine klare braungefärbte wäßrige Lösung mit einem Feststoffgehalt von 54,3 %. Der Gehalt an Maleinsäure in der Polymerlösung beträgt, bezogen auf Feststoffe, 30 %.

### Vergleichsbeispiel 7

In der im Beispiel 4 beschriebenen Apparatur wird eine Lösung von 400 g Maleinsäureanhydrid in 600 g o-Xylol vorgelegt und unter Rühren in einem Stickstoffstrom zum Sieden erhitzt. Sobald die Lösung zu sieden beginnt, dosiert man innerhalb von 5 Stunden kontinuierlich eine Lösung von 60 g Dilauroylperoxid in 200 g o-Xylol zu. Nach Abschluß der Initiatorzugabe wird das Reaktionsgemisch noch 1 Stunde zum Sieden erhitzt, dann auf 95°C abgekühlt und zur Hydrolyse des Polymerisates mit 300 g Wasser versetzt. Das nicht umgesetzte o-Xylol wird mit Hilfe einer Wasserdampfdestillation entfernt. Es resultiert eine klare gelbgefärbte wäßrige Lösung mit einem Feststoffgehalt von 51 %. Die wäßrige Lösung enthält, bezogen auf Feststoffe, 23 % Maleinsäure.

### Vergleichsbeispiel 8

In der im Vergleichsbeispiel 5 beschriebenen Apparatur wird eine Lösung von 100 g Maleinsäureanhydrid in 233 g technischem Xylol unter Stickstoff und guter Durchmischung zum Sieden erhitzt und beim Sieden innerhalb von 2 Stunden mit einer Lösung von 7,5 g 2,2ʹ-Azobisisobutyronitril in 50 g technischem Xylol versetzt. Die Polymerisation wird beim Siedepunkt des Reaktionsgemisches durchgeführt. Das Reaktionsgemisch wird nach Beendigung der Initiatorzugabe noch 4 Stunden zum Sieden erhitzt, dann auf 97°C abgekühlt, mit 50 g Wasser versetzt und einer Wasserdampfdestillation unterworfen. Es resultiert eine klare rotbraun gefärbte wäßrige Lösung mit einem Feststoffgehalt von 54,2 %. Die wäßrige Polymerlösung enthält, bezogen auf Feststoffe, 13,3 % Maleinsäure.

### Vergleichsbeispiel 9

Das Vergleichsbeispiel 8 wird mit der Ausnahme wiederholt, daß man als Polymerisationsinitiator eine Lösung von 7,5 g 2,2ʹ-Azobis(2,4-dimethylvaleronitril) in 50 g technischem Xylol verwendet. Man erhält eine klare rotbraun gefärbte wäßrige Polymerlösung, mit einem Feststoffgehalt von 56,3 %. Der Gehalt an Maleinsäure beträgt, bezogen auf Feststoffe, 42,9 %.

### Vergleichsbeispiel 10

Das Vergleichsbeispiel 7 wird mit der Ausnahme wiederholt, daß man anstelle der dort beschriebenen Initiatorlösung eine Initiatorlösung von 60 g Methylethylketonperoxid in 100 g o-Xylol einsetzt. Man erhält hierbei eine schwarzbraun gefärbte wäßrige Lösung mit einem Feststoffgehalt von 53,1 %. Die wäßrige Lösung enthält, bezogen auf Feststoffe, 78,4 % Maleinsäure.

Die Vergleichsbeispiele zeigen deutlich, daß man mit den bisher für die Polymerisation von Maleinsäureanhydrid beschriebenen Polymerisationsinitiatoren Polymerisate mit hohem Restmonomerengehalt erhält. Der Restmonomerengehalt der wäßrigen Polymerlösungen, die gemäß den Vergleichsbeispielen 2 bis 10 erhalten wurden, war so hoch, daß eine Bestimmung des K-Wertes nicht möglich war. Die Vergleichsbeispiele zeigen aber auch außerdem, daß erhebliche Mengen an Di-tert.-butylperoxid für die Polymerisation von Maleinsäureanhydrid erforderlich sind, um überhaupt einen einigermaßen befriedigenden Umsatz bei der Polymerisation zu erzielen. Demgegenüber wird mit den Peroxiestern gemäß der vorliegenden Erfindung bei der Polymerisation von Maleinsäureanhydrid ein Umsatz erzielt, der oberhalb von 99 % liegt. Der Gehalt an Maleinsäure in den hydrolysierten Produkten betrug in allen Fällen weniger als 1 %. Die hohen Umsätze bei dem erfindungsgemäßen Verfahren bzw. der geringe Gehalt an Maleinsäure in den hydrolysierten Polymerisaten wird gegenüber dem bekannten Stand der Technik überraschenderweise mit einer geringeren Menge an Initiator erreicht.

### Anwendungstechnische Beispiele

### Testmethoden

### CaCO₃-Inhibierung dynamisch

Dieser Test simuliert die Belagsbildung von Calciumcarbonat in einem Kühlkreislauf. Bei dieser Untersuchungsmethode wird Testwasser mit 30°d Ca-Härte, 10°d Mg-Härte und 56°d Carbonathärte während 2 h durch eine auf 75°C erhitzte Glasspirale gepumpt (Flußrate 0,5 l/h). Der in der Spirale gebildete Belag wird heausgelöst und Ca + Mg komplexometrisch bestimmt. Die Inhibitorwirkung errechnet sich aus der Belagsmenge im Blindversuch und bei Anwesenheit der entsprechenden Mengen des Belagsverhinderers.

### Ca-Phosphat-Dispegierung

Mit diesem Test kann die dispergierende Wirkung auf ausgefallene Niederschläge ermittelt werden. Hierbei wird Testwasser mit 500 ppm Calciumphosphat-Niederschlag bei pH 8,5-9 l h bei 100°C gehalten und anschließend in einen Standzylinder überführt. Nach 1 h wird der Ca-Gehalt in der Mitte des Standzylinders komplexometrisch ermittelt. Die Dispergierwirkung errechnet sich aus der Menge von dispergiertem Calciumphosphat im Blindversuch und bei Anwesenheit des Dispergiermittels.

### Screening-Test Meerwasserentsalzung

Synthetisches Meerwasser (200 ml) nach DIN 50 900 (1960), mit einer Anfangssalzkonzentration von 6,15 % wird bei 95°C eingedampft, bis eine Trübung sichtbar wird. Das erhaltene Volumen ist ein Maß für die Wirksamkeit des Belagsverhinderers.

### Beispiel 12

Die nach Beispiel 6 erhaltene Polymaleinsäure wurde nach den oben beschriebenen Testmethoden untersucht. Für die Calciumcarbonatinhibierung (dynamisch) wird bei einem Zusatz von 2 ppm Polymaleinsäure zum Wasser ein Wert von 83,3 % gefunden.

Für die Calciumphosphatdispergierung ermittelt man bei einem Zusatz von 30 ppm Polymaleinsäure einen Wert von 99,3 %, bei einem Zusatz von 45 ppm einen Wert von 99,9 % und bei einem Zusatz von 60 % einen Wert von 99,9 %.

Bei der Meerwassereindampfung wird bei einer Dosierung von 0,5 ppm der Polymaleinsäure gemäß Beispiel 6 ein Volumen von 114 ml ermittelt, bei dem eine Trübung erkennbar wird.

### Vergleichsbeispiel 11

Gemäß Vergleichsbeispiel 1 erhaltene Polymaleinsäure wurde nach den oben beschriebenen Testmethoden untersucht. Die Calciumcarbonatinhibierung beträgt bei einem Zusatz von 2 ppm Wirksubstanz 68,5 %.

Für die Calciumphosphatdispergierung ermittelt man bei einem Zusatz von 30 ppm einen Wert von 2,1 %, bei einem Zusatz von 45 % einen Wert von 55,0 % und bei einem Zusatz von 60 ppm einen Wert von 62,9 %.

Bei der Meerwassereindampfung wird bei einem Zusatz von 0,5 ppm der Polymaleinsäure gemäß Vergleichsbeispiel 1 ein Volumen von 129 ml ermittelt, bei dem eine Trübung erkennbar ist.

## Patentansprüche

1. Verfahren zur Herstellung von Polymaleinsäure durch Polymerisieren von Maleinsäureanhydrid in einem aromatischen Kohlenwasserstoff bei Temperaturen von 60 bis 200°C in Gegenwart von Polymerisationsinitiatoren und Hydrolysieren der Polymerisate, dadurch gekennzeichnet, daß man als Polymerisationsinitiatoren Peroxiester der Formeln 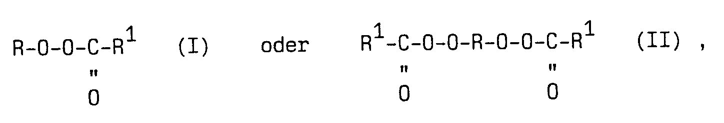 in denen R¹ einen gesättigten C₁- bis C₁₇-Alkyl- oder Arylrest, H oder einen ethylenisch ungesättigten C₂- bis C₁₇-Alkenylrest, der gegebenenfalls noch eine Carboxylgruppe tragen kann,
R in Formel I für eine C₃- bis C₂₂-Alkylgruppe oder eine Alkylgruppe steht, die einen oder mehrere aromatische Substituenten aufweist, und
R in Formel II eine C₂- bis C₂₂-Alkylengruppe bedeutet,
in einer Menge von 1 bis 20 Gew.%, bezogen auf Maleinsäureanhydrid, einsetzt.

2. Verfahren nach Anspruch 1, dadurch gekennzeichnet, daß man die Polymerisation in Benzol, Toluol, Xylol, Ethylbenzol, Diethylbenzol, Isopropylbenzol, Diisopropylbenzol oder deren Mischungen bei 80 bis 150°C in Gegenwart von Peroxyestern durchführt, die sich von gesättigten C₄- bis C₁₀-Carbonsäuren ableiten.

3. Verfahren nach den Ansprüchen 1 und 2, dadurch gekennzeichnet, daß man die Polymerisationsinitiatoren in einer Menge von 5 bis 16 Gew.%, bezogen auf Maleinsäureanhydrid, einsetzt.

4. Verfahren nach den Ansprüchen 1 bis 3, dadurch gekennzeichnet, daß man als Polymerisationsinitiatoren tert.-Butyl-per-2-ethylhexanoat, tert.-Butylperpivalat oder tert.-Butylperbenzoat oder Mischungen davon einsetzt.

5. Verfahren nach den Ansprüchen 1 und 3, dadurch gekennzeichnet, daß man als Polymerisationsinitiator tert.-Butylpermaleinat einsetzt.

## Claims

1. A process for the preparation of polymaleic acid by polymerizing maleic anhydride in an aromatic hydrocarbon at from 60 to 200°C in the presence of a polymerization initiator, and hydrolyzing the polymers, which comprises employing a polymerization initiator that is a peroxyester of the formula 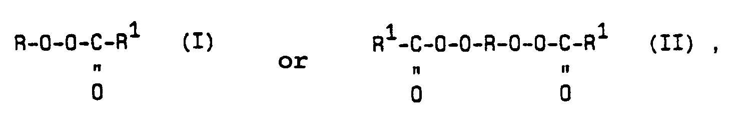 where R¹ is a saturated C₁-C₁₇-alkyl radical or aryl radical, H or an ethylenically unsaturated C₂-C₁₇-alkenyl radical which may or may not additionally possess a carboxyl group,
R in formula I is C₃-C₂₂-alkyl or alkyl possessing one or more aromatic substituents, and
R in formula II is C₂-C₂₂-alkylene,
in an amount of from 1 to 20% by weight, based on maleic anhydride.

2. A process as claimed in claim 1, wherein the polymerization is carried out in benzene, toluene, xylene, ethylbenzene, diethylbenzene, isopropylbenzene, diisopropylbenzene or mixtures thereof at from 80 to 150°C in the presence of peroxyesters derived from saturated C₄-C₁₀-carboxylic acids.

3. A process as claimed in claim 1 or 2, wherein the polymerization initiator is employed in an amount of from 5 to 16% by weight, based on maleic anhydride.

4. A process as claimed in any of claims 1 to 3, wherein the polymerization initiator employed is tert.-butyl per-2-ethylhexanoate, tert.-butyl perpivalate or tert.-butyl perbenzoate or a mixture of these.

5. A process as claimed in claims 1 and 3, wherein tert.-butyl permaleate is employed as the polymerization initiator.

## Revendications

1. Procédé de préparation du poly(acide maléique) par la polymérisation de l'anhydride maléique dans un hydrocarbure aromatique, à des températures de 60 à 200°C et en présence d'amorceurs de polymérisation et l'hydrolyse des polymères, caractérisé en ce que, à titre d'amorceurs de polymérisation, on utilise des peroxyesters des formules 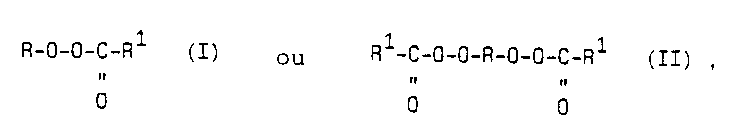 dans lesquelles R¹ représente un radical alkyle en C₁-C₁₇ ou un radical aryle, un atome d'hydrogène ou un radical alcényle en C₂ à C₁₇ éthyléniquement insaturé, qui peut éventuellement encore porter un radical carboxyle,
R dans la formule I représente un radical alkyle en C₃ à C₂₂, ou un radical alkyle qui porte un ou plusieurs substituants aromatiques et
R dans la formule II représente un radical alkylène en C₂ à C₂₂,
en une proportion de 1 à 20% en poids par rapport à l'anhydride maléique.

2. Procédé suivant la revendication 1, caractérisé en ce que l'on entreprend la polymérisation dans le benzène, le toluène, le xylène, l'éthylbenzène, le diéthylbenzène, l'isopropylbenzène, le diisopropylbenzène ou leurs mélanges, à des températures qui varient de 80 à 150°C et en la présence de peroxyesters qui dérivent d'acides carboxyliques saturés en C₄ à C₁₀.

3. Procédé suivant les revendications 1 et 2, caractérisé en ce que l'on utilise les amorceurs de polymérisation en une proportion de 5 à 16% en poids, par rapport à l'anhydride maléique.

4. Procédé suivant les revendications 1 à 3, caractérisé en ce que l'on utilise, à titre d'amorceurs de polymérisation, le per-2-éthylhexanoate de tert-butyle, le perpivalate de tert-butyle, ou le perbenzoate de tert-butyle, ou des mélanges de ces composés.

5. Procédé suivant les revendications 1 et 3, caractérisé en ce que l'on utilise le permaléate de tert-butyle à titre d'amorceur de polymérisation.
